# EUROPÄISCHE PATENTANMELDUNG

(11) **EP 1 808 805 A1**
(43) Veröffentlichungstag der Anmeldung: **18.07.2007**
(21) Anmeldenummer: 06100469.3
(22) Anmeldetag: 17.01.2006
(51) Int. Cl.: G06Q 10/00, G06Q 30/00

(54) **Kommunikationsverfahren**

(71) Anmelder: ViaLuna GmbH, 01809 Heidenau (DE)
(72) Erfinder: Foster, Shane, Frisco, TX 75034 (US)
(74) Vertreter: Betten & Resch

(57) **Zusammenfassung**

Ein Kommunikationsverfahren weist die Schritte der Erfassung einer Anzahl von Ziel-Kommunikationspartnern aus einer Datenbank (20) enthaltend wenigstens Adressinformation zu einer Vielzahl von Ziel-Kommunikationspartnern, der Erstellung von den erfassten Ziel-Kommunikationspartnern zugeordneten personalisierten lnternetadressen, der Versendung von Mitteilungen an die erfassten Ziel-Kommunikationspartner enthaltend die personalisierte Internetadresse, der Erfassung eines Zugriffs auf eine der personalisierten Internetadressen, der Erzeugung personalisierter Internetseiten zu den aufgerufenen personalisierten lnternetadressen, welche Internetseiten ein Kommunikations-Auswahlkriterium enthalten, und der Erfassung auf, ob das Kommunikations-Auswahlkriterium für eine aufgerufene personalisierte Internetseite erfüllt ist, wobei dann, wenn das Kommunikations-Auswahlkriterium erfüllt ist, eine Kommunikationsverbindung mit dem zugehörigen Ziel-Kommunikationspartner aufgebaut wird. Das erfindungsgemäße Verfahren ermöglicht den effizienten Aufbau von Kommunikationsverbindungen mit einer Vielzahl von in einer Datenbank gespeicherten Ziel-Kommunikationspartnern auf und erlaubt gleichzeitig die Aktualisierung und Validierung der in der Datenbank gespeicherten Daten.

## Beschreibung

### Gebiet der Erfindung

Die vorliegende Erfindung betrifft ein Kommunikationsverfahren sowie ein Kommunikationssystem zur Herstellung einer Kommunikationsverbindung mit einer Vielzahl von in einer Datenbank gespeicherten Ziel-Kommunikationspartnern.

### Technologischer Hintergrund

Viele Unternehmen bzw. Anbieter von Dienstleistungen besitzen umfangreiche Personendatenbanken von Kunden, früheren Kunden, Interessenten usw. Mit der umfassenden lmplementierung von Informationstechnologien in allen Industrie- und Dienstleistungsbereichen hat der Umfang derartiger Personen-Datenbanken in den letzten Jahren stetig zugenommen. Weiterhin ist es möglich, Personendatenbanken kommerziell zu erwerben. Aufgrund des hohen Zeitaufwandes stellt die Pflege solcher umfangreichen Datenbanken und die Validierung der darin enthaltenen Informationen jedoch ein immer größer werdendes Problem dar.

Unternehmen im allgemeinen bzw. Veranstalter von Tagungen, Kongressen, Pressekonferenzen, Verkaufsveranstaltungen und dergleichen im speziellen greifen für die Versendung von Einladungen bzw. Informationen beispielsweise auf solche umfangreichen Personendatenbanken zurück. Wenn neue Produkte oder Veranstaltungen etabliert werden sollen, ist es auch hier möglich, Adressenpools zu erwerben oder aufzubauen. Einladungen für die Veranstaltung können beispielsweise per Post oder per Email versandt werden. Letztere gehen dabei in der Masse empfangener Emails unter. Weiterhin besteht die Gefahr, dass sie in einem Spam-Filter "hängenbleiben". Der Postversand von Broschüren verspricht mehr Aufmerksamkeit; Druck und Porto sind jedoch sehr teuer. Daher besteht der Bedarf an einem Verfahren, aus einem umfangreichen Personendatenbestand Personen herauszufiltern, die für eine bestimmte Veranstaltung, ein bestimmtes Produkt etc. mit höherer Wahrscheinlichkeit tatsächlich Interesse haben.

### Zusammenfassung der Erfindung

Der vorliegenden Erfindung liegt daher die Aufgabe zu Grunde, ein Kommunikationsverfahren und ein Kommunikationssystem vorzuschlagen, welches eine effiziente Verwaltung und Validierung von in einer Personendatenbank gespeicherten Daten sowie eine effiziente und preisgünstige Kommunikation mit ausgewählten der in der Datenbank enthaltenen Personen ermöglicht.

Gelöst wird die Aufgabe durch ein Kommunikationsverfahren gemäß Anspruch 1 sowie ein Kommunikationssystem gemäß Anspruch 17.

Das erfindungsgemäße Kommunikationsverfahren umfasst die Schritte der Erfassung einer Anzahl von Ziel-Kommunikationspartnern aus einer Datenbank enthaltend wenigstens Adressinformationen zu einer Vielzahl von Ziel-Kommunikationspartnern, der Erstellung von den erfassten Ziel-Kommunikationspartnern zugeordneten personalisierten Internetadressen, der Versendung von elektronischen (Email, SMS, etc.) oder postalischen Mitteilungen (Postkarte, Brief, Päckchen) an die erfassten Ziel-Kommunikationspartner enthaltend wenigstens die personalisierte Internetadresse, der Erfassung eines Zugriffs auf eine der personalisierten Internetadressen, der unmittelbaren Erzeugung personalisierter Internetseiten mit vorzugsweise dynamisch verknüpften Inhalten und damit wählbaren Content zu den aufgerufenen personalisierten Internetadressen, welche Internetseiten ein Kommunikations-Auswahlkriterium enthalten, und der Erfassung, ob das Kommunikations-Auswahlkriterium für eine aufgerufene personalisierte Internetseite erfüllt ist, und wenn das Kommunikations-Auswahlkriterium erfüllt ist, den Schritt des Aufbaus einer Kommunikationsverbindung in Echtzeit zwischen Kommunikationsagent und dem zugehörigen Ziel-Kommunikationspartner.

Bei einem Kommunikationsagenten wird hier von einem Call-Center, einzelnen Vertriebsagenten des beauftragenden Unternehmens oder von einem Logistik-Center ausgegangen, das den weiteren Ablauf nach dem Aufbau der Kommunikationsverbindung zum Kommunikationspartner übernimmt. Die dabei generierten Informationen werden ebenso über Schnittstellen der Datenbank zwecks ganzheitlicher Analyse hinzugefügt.

Das erfindungsgemäße Kommunikationssystem weist eine Zielpersonen-Datenbank mit Speichermitteln zum Speichern wenigstens der Adressinformationen einer Vielzahl von Ziel-Kommunikationspartnern sowie ein Server-Computersystem auf, wobei das Server-Computersystem eingerichtet ist zur Erfassung einer Anzahl von in der Datenbank erhaltenen Ziel-Kommunikationspartnern, Erstellung personalisierter Internetadressen für die erfassten Ziel-Kommunikationspartner, Erfassung, wenn eine der personalisierten Internetadressen angewählt wird, bei Erfassung einer Anwahl, Erzeugung einer der personalisierten Internetadresse zugeordneten personalisierten und vorzugsweise inhaltlich dynamisch verknüpften Internetseite, die wenigstens ein Kommunikations-Auswahlkriterium enthält, Erfassung, ob für den Aufruf der Internetseite das Kommunikations-Auswahlkriterium erfüllt wird, und wenn das Kommunikations-Auswahlkriterium erfüllt wird, Herstellung einer Kommunikationsverbindung zwischen Kommunikationsagent und dem Ziel-Kommunikationspartner in Echtzeit vorzugsweise mit gleichzeitiger Datenübermittelung der Auswahlkriterien.

Die Erfindung ermöglicht so, aus der Vielzahl an in der Datenbank enthaltenen Ziel-Kommunikationspartnern diejenigen zu erfassen, die an einem bestimmten Thema oder Gegenstand Interesse zeigen. Über die zugeordnete personalisierte Internetseite und den daraus gewonnenen Daten ist es möglich, dem Ziel-Kommunikationspartner weitere Informationen zukommen zu lassen, gleichzeitig die in der Datenbank gespeicherten Personendaten zu validieren und gesamtheitlich eine Auswertung im Rahmen einer Marktforschung in Echtzeit durchzuführen. Die gewonnenen Daten werden in einem standartisierten Format wie Tabellenkalkulationsformaten ausgegeben und können individuell weiter verarbeitet werden.

Vergleichend mit durchschnittlichen Kennzahlen und den Auswertungsergebnissen der jeweiligen personalisierten Internetseite lässt sich ein Auswahlkriterium gewinnen, ob eine Kommunikation zu dem Ziel-Kommunikationspartner hergestellt werden soll oder nicht. Dadurch kann eine sehr hohe "Trefferquote" bei der Kommunikation erzielt und dadurch Kosten eingespart werden.

Bei dem Auswahlkriterium kann es sich um das "Anklicken" einer bestimmten Antwort auf der personalisierten Internetseite durch den Ziel-Kommunikationspartner, um eine Anfrage durch diesen oder um einen Session-Parameter wie Dauer oder Informationswahl handeln.

Die Herstellung der Kommunikation kann durch einen oder mehrere Kommunikationsagenten durchgeführt werden, die aufgrund der durch den Besuch der personalisierten Internetseite gewonnenen Informationen ausgewählt werden können bzw. zuvor anhand von territorialen und/oder fachlichen Zuständigkeiten bestimmt wurden. Der Kommunikationsagent kann die Kommunikation nach einer in Echtzeit stattfindenen Benachrichtigung auf herkömmliche Art und Weise per Telefon, Post oder über eine internetbasierte Messenger-Verbindung mittels Ton und Bild gebenden Verfahren, einem Chatroom-System oder dergleichen herstellen.

Die personalisierte Internetseite kann Veranstaltungs- oder Produktinformationen oder auch Fragen enthalten, die durch den Ziel-Kommunikationspartner zu beantworten sind. Die durch die Beantwortung von Fragen erhaltenen Informationen können zur Aktualisierung der Datenbank verwendet werden.

Die persönliche Internetadresse kann beispielsweise Vor- und Nachnamen und/oder andere persönliche Daten wie Geburtsnamen, Geburtsort oder dergleichen in der URL enthalten. Die Mitteilung der persönlichen URL kann per Email oder auch per Brief erfolgen, um einen höheren Aufmerksamkeitsgrad zu erreichen.

Vorzugsweise wird bei Aufruf der personalisierten URL die personalisierte Internetseite in Echtzeit erst erstellt, so dass es nicht notwendig ist, im Server-System speicherplatzaufwändig eine große Anzahl von Internetseiten vorrätig zu halten.

Die Internetseite kann personalisierte Komponenten wie die namentliche Anrede bzw. individuelle Angaben sowie auf den Ziel-Kommunikationspartner zugeschnittene Informationen durch dynamisch verknüpfte Inhalte enthalten, um für diesen besonders ansprechend zu wirken. Je nach Wahl wird die jeweilige Folgeseite anderes dargestellt. Die Seite kann vorzugsweise aus Grafik- und Textmodulen zusammengesetzt sein, die eine schnelle, gleichzeitig personalisierte und ansprechende Gestaltung ermöglicht.

Die Erfindung wird im Folgenden anhand bevorzugter Ausführungsbeipiele unter Bezugnahme auf die beiliegenden Zeichnungen im Detail erläutert.

### Kurze Beschreibung der Zeichnungen

Figur 1 ist ein Blockschaltbild, das den Aufbau eines Ausführungsbeispiels des erfindungsgemäßen Kommunikationssystems zeigt.

Figur 2 ist ein Flussdiagramm, das schematisch die Verfahrensschritte eines Ausführungsbeipiels des erfindungsgemäßen Kommunikationsverfahrens zeigt.

Figur 3 ist eine schematische Darstellung der Begrüßungsseite einer personalisierten Webseite gemäß einem Ausführungsbeispiel der Erfindung.

### Detaillierte Beschreibung der Erfindung

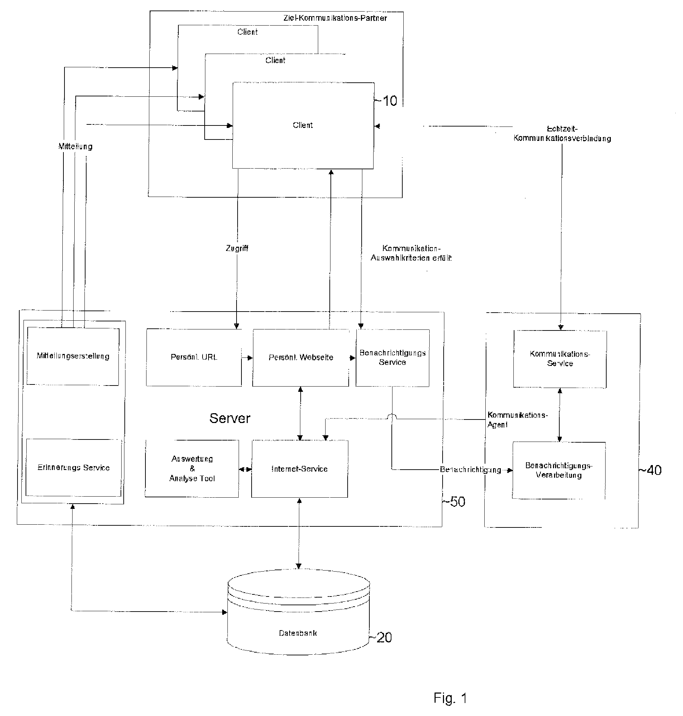

Figur 1 ist ein schematisches Blockbild eines Ausführungsbeispiels des erfindungsgemäßen Kommunikationssystems.

Eine Datenbank 20 weist Speichermittel auf zur Speicherung wenigstens von Personendaten einer Vielzahl von Ziel-Kommunikationspartnern. Bei der Datenbank kann es sich um ein beliebiges kommerzielles Datenbanksystem bestehend aus Hard- und Software handeln. Die Erfindung ist nicht auf ein bestimmtes Datenbanksystem oder eine bestimmte Datenkonfiguration oder ein bestimmtes Datenmodell beschränkt. In den meisten Fällen handelt es sich um eine Datenbank mit personenbezogenen Daten sowie hinterlegten Interessensprofilen zu einer Vielzahl von Ziel-Kommunikationspartnern.

Mit der Datenbank 20 verbunden ist ein Server-Computersystem 50 welches auf die in der Datenbank 20 gespeicherten Daten zugreift. Die Komponenten des Serversystems sind wiederum nicht auf eine bestimmte Konfiguration oder einen bestimmten Typ eingeschränkt. Es kann sich um einen einzelnen Computer oder auch ein lokales oder verteiltes Computernetz oder auch um mobile Geräte handeln. Der Server 50 ist eingerichtet, die in der Datenbank 20 gespeicherten Adressdaten der Ziel-Kommunikationspartner zu erfassen. Die Adressdaten können eine Hausadresse, Büroadresse, Telefonnummer, Internetadresse, Mobiltelefonnummer oder anderes enthalten.

Zu den erfassten Ziel-Kommunikationspartnern werden durch den Server 50 jeweils personalisierte Internetadressen erzeugt. Diese können beispielsweise den Vor- und Nachnamen in der URL enthalten wie www.kongressinfo.de/MaxMustermann. Das System stellt dabei sicher, dass die URL nicht zuvor verwendet wurde.

Die personalisierte URL wird dann beispielsweise an eine Internetadresse des Ziel-Kommunikationspartners gesendet und dort von einem Client 10 empfangen. Mitteilungen, die eine persönliche URL enthalten, können elektronisch erstellt werden und werden je nach Ausgabemedium via Post, Email, Fax, SMS versendet. Bei dem Client 10 kann es sich selbstverständlich ebenfalls um einen Server-Computer handeln. In der im Folgenden beschriebenen Kommunikationssequenz mit dem Server 50 erfüllt der Computer, das Laptop, der PDA oder das Telefon / Blackberry-Endgerät des Ziel-Kommunikationspartners die Funktion eines Client. Anstatt auf elektronischem Wege kann die personalisierte URL jedoch auch per Post oder auf anderem Wege versandt werden, um einen höheren Aufmerksamkeitsgrad des Ziel-Kommunikationspartners zu erreichen.

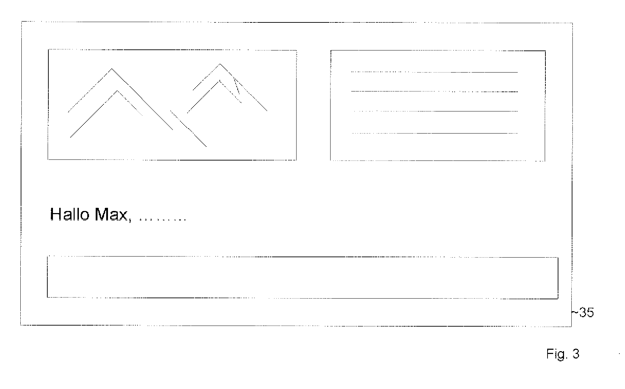

Die Ziel-Kommunikationspartner haben unabhängig vom verwendeten PC die Möglichkeit, sich bei ihrer personalisierten Internetadresse einzuwählen. Die Einwahl wird durch den Server 50 erfasst, woraufhin dieser eine personalisierte Webseite 35 erzeugt, deren Begrüßungsseite beispielsweise wie in Figur 3 schematisch dargestellt aussehen kann. Die personalisierte Internetseite kann dabei persönliche Informationen des Ziel-Kommunikationspartners aus der Datenbank enthalten, wie beispielsweise den Vor- oder Nachnamen oder auch andere Informationen. Weiterhin enthält die persönliche Webseite zusätzliche Informationen zu dem gewählten Thema, beispielsweise dem geplanten Kongress oder auch einem bestimmten Produkt oder einer Dienstleistung. Um die persönliche Webseite schnell in Echtzeit erstellen zu können, ist diese vorzugsweise aus Grafik- und Textmodulen zusammengesetzt, derart, dass sie für den Ziel-Kommunikationspartner einen möglichst ansprechenden Eindruck macht.

Die personalisierte Webseite kann auch interaktive Elemente enthalten, wie etwa Fragen, ein Quiz, oder durch den Ziel-Kommunikationspartner abzugebende Bewertungen. Der Ziel-Kommunikationspartner kann auch die Möglichkeit haben, über das Anklicken einer Schaltfläche oder dergleichen zusätzliche Information anzufordern. Der Server 50 erfasst die Eingaben des Ziel-Kommunikationspartners auf den interaktiven Elementen der Webseite sowie Session-Parameter wie beispielsweise die Zeitdauer der einzeln betrachteten Webseiten oder welche der Webseiten angeklickt werden. Entsprechend diesen erfassten Informationen bestimmt der Server-Computer 50 ein Kommunikations-Auswahlkriterium, ob eine Kommunikationsverbindung zwischen dem Kommunkationsagenten und dem Ziel-Kommunikationspartner hergestellt werden soll oder nicht. Das Auswahlkriterium kann beispielsweise das Anklicken bestimmter Seiten, die Antworten auf bestimmte Fragen oder auch die Anforderung von Informationen sein. Ist dieses Auswahlkriterium erfüllt, so verschickt der Server 50 eine Benachrichtigung, wie beispielsweise eine Email, ein systemunabhängigen Datenstrom oder eine lD-Übergabe für einen Outbound-Dialer (Call-Center), an einen Kommunikationsagenten 40 (Benachrichtigungsservice), der dann eine Kommunikationsverbindung mit dem Ziel-Kommunikationspartner in Echtzeit herstellt, beispielsweise per internetgebundener Echtzeit-Kommunikationssoftware (Chatsystem) mit dem Client 10 oder auch direkt per Telefon. Bei einer großen Zahl von Zugriffen auf die personalisierten Internetseiten ist es auch möglich, eine Vielzahl von Kommunikationsagenten einzusetzen, wobei die Zuordnung verschiedener Kommunikationsagenten von der in der Datenbank gespeicherten Information und/oder von der durch die interaktiven Elemente der Webseite erhaltenen Informationen abhängig gemacht werden kann.

Über eine Empfänger-Schnittstelle wird die Benachrichtigung vom Kommunikationsagenten 40 verarbeitet. Der Kommunikationsagent kann unterschiedlicher technische Funktionen erfüllen. Die eingehenden Daten werden decodiert und z.B. durch einen Dialer zum Einsatz für ausgehende Telefonate an den Kommunikationsservice weitergeleitet. Wünscht der Zielkommunikationspartner eine Online-Verbindung elektronisch in Echtzeit aufzubauen, so verbindet der Kommunikationsservice ein Chat-Tool und/oder ein Internet-Telefon zur Kommunikation.

Weiterhin ist ein Erinnerungsservice vorgesehen. Jeder Ziel-Kommunikationspartner kann eine Erinnerung in der Datenbank speichern. Läuft diese Zeitspanne ab und es findet kein Kontakt über die persönliche URL statt, so wird nach Ablauf der eingestellten Zeitspanne eine Erinnerungsfunktion ausgelöst. Diese erlaubt dann eine weitere Mitteilung an den Ziel-Kommunikationspartner zu senden, je nach Medium in unterschiedlicher Form. Hat der Ziel-Kommunikationspartner über den Zugriff via persönlicher URL seine persönliche Webseite abgerufen und/oder Kommunikations- Auswahlkriteien erfüllt, so löst er eine Echtzeitbenachrichtigung aus.

Während der Kommunikation zwischen dem Ziel-Kommunikationspartner und der persönlichen Webseite bzw. dem Kommunikationsagenten werden die erfassten Daten in der Datenbank 20 zur Echtzeitanalyse abgelegt und aufbereitet. Der Zugriff auf diese Daten kann ebenfalls in Echtzeit erfolgen. Die Datenbank ermöglicht die Auswertung der Daten in dezidierter sowie kumulierter Form und erlaubt das Erstellen von Profilen in Echtzeit und nach den Kommunikations-Auswahlkriterien.

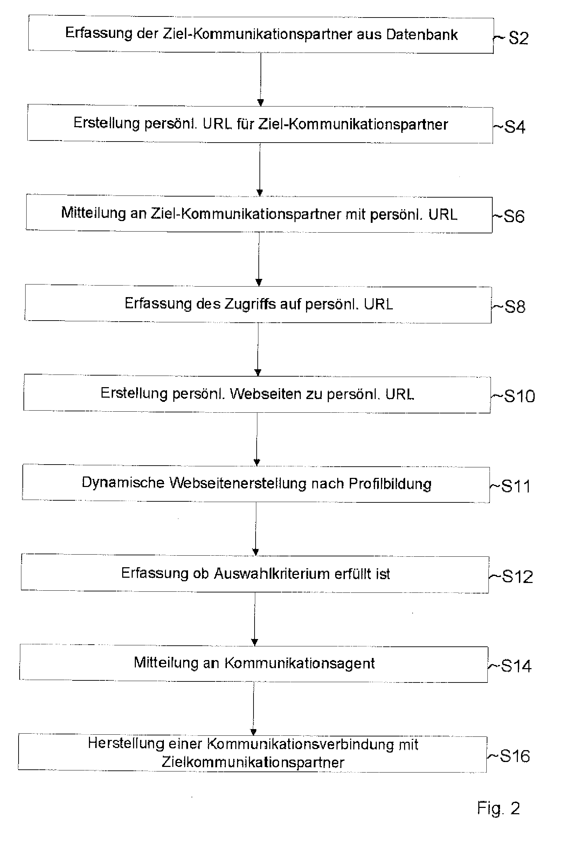

Die wesentlichen Verfahrensschritte des erfindungsgemäßen Kommunikationsverfahrens sind im Flussdiagramm von Figur 2 nochmals schematisch dargestellt.

Die Daten einer Anzahl von Ziel-Kommunikationspartnern werden in Schritt S2 aus der Datenbank 20 erfasst und für diese in dem darauffolgenden Schritt S4 persönliche Internetadressen erzeugt. Die Internetadressen werden dann in Verfahrensschritt S6 postalisch oder elektronisch den jeweiligen Ziel-Kommunikationspartnern mitgeteilt. Wenn einer oder mehrere der Ziel-Kommunikationspartner auf die persönliche URL zugreifen, wird dies durch den Server in einem Verfahrensschritt S8 erfasst und dann unmittelbar in Echtzeit die zugehörige persönliche Webseite erstellt (Verfahrensschritt S10). Durch eingegebene Informationen, beantwortete Fragen oder ausgesuchte Links wird mittels einer Profilbildung der Webseiteninhalt im Schritt S11 dynamisch erstellt. Während der Session wird in Schritt S12 erfasst, ob das Kommunikations-Auswahlkriterium erfüllt ist. Wenn ja, wird in Schritt S14 eine Mitteilung an den Kommunikationsagenten in Echtzeit versandt, der dann die Kommunikationsverbindung mit dem Ziel-Kommunikationspartner herstellt (S16).

Die Erfindung stellt so ein Verfahren und ein System bereit, um auf effiziente Weise eine themenbezogene Kommunikationsverbindung zu einer Vielzahl von Ziel-Kommunikationspartnern personalisiert herzustellen. Die Information kann zielgerichtet an diejenigen Kommunikationspartner übermittelt werden, die ein Kommunikations-Auswahlkriterium erfüllen. Weiterhin können die in der Datenbank gespeicherten Personendaten validiert, aktualisiert bzw. ergänzt werden.

## Patentansprüche

1. Kommunikationsverfahren, aufweisend die Schritte:
- Erfassung einer Anzahl von Ziel-Kommunikationspartnern aus einer Datenbank (20) enthaltend wenigstens Adressinformationen zu einer Vielzahl von Ziel-Kommunikationspartnern,
- Erstellung von den erfassten Ziel-Kommunikationspartnern zugeordneten personalisierten Internetadressen,
- Versendung von elektronischen oder postalischen Mitteilungen an die erfassten Ziel-Kommunikationspartner enthaltend wenigstens die personalisierte Internetadresse,
- Erfassung eines Zugriffs auf eine der personalisierten internetadressen in Echtzeit,
- Erzeugung personalisierter Internetseiten zu den aufgerufenen personalisierten Internetadressen in Echtzeit, welche Internetseiten wenigstens ein Kommunikations-Auswahlkriterium enthalten,
- Erfassung, ebenfalls in Echtzeit, ob das Kommunikations-Auswahlkriterium für eine aufgerufene personalisierte Internetseite erfüllt ist, und
- wenn das Kommunikations-Auswahlkriterium erfüllt ist, zeitlich bestimmbarer Aufbau einer Kommunikationsverbindung zwischen Kommunikationsagent und dem zugehörigen Ziel-Kommunikationspartner.

2. Verfahren nach Anspruch 1, wobei das Kommunikations-Auswahlkriterium erfüllt ist, wenn der Ziel-Kommunikationspartner über die personalisierte Internetseite eine Anfrage übermittelt.

3. Kommunikationsverfahren nach Anspruch 1, wobei das Kommunikations-Auswahlkriterium erfüllt ist, wenn der Ziel-Kommunikationspartner auf der personalisierten Internetseite eine bestimmte Auswahl trifft.

4. Verfahren nach Anspruch 1, wobei das Kommunikations-Auswahlkriterium erfüllt ist, wenn ein bestimmter Session-Parameter, beispielsweise eine festgelegte Zeitdauer des Aufrufs oder Anzahl der besuchten personalisierten Internetseiten und/oder vergleichend mit durchschnittichen Kennzahlen und den jeweiligen Auswertungsergebnissen ein entsprechender Wert erreicht ist.

5. Kommunikationsverfahren nach einem der Ansprüche 1 bis 4, wobei die Erfüllung des Kommunikations-Auswahlkriteriums einem externen Kommunikationsagenten (40) mitgeteilt wird, der nach Aufbau der Kommunikationsverbindung mit dem Ziel-Kommunikationspartner die weitere Kommunikation übernimmt.

6. Kommunikationsverfahren nach Anspruch 5, wobei sich der Kommunikationsagent zeitnah per Post oder in Echtzeit per Telefon oder über eine internetbasierende Kommunikationsverbindung (ton-und bildgebendes Verfahren, Chatroom) mit dem Ziel-Kommunikationspartner in Verbindung setzt.

7. Verfahren nach einem der Ansprüche 1 bis 6, wobei die personalisierte internetseite durch den Ziel-Kommunikationspartner zu beantwortende Fragen und/oder ein oder mehrere Auswahlpunkte enthält.

8. Verfahren nach Anspruch 7, wobei mittels der durch die Beantwortung der Fragen bzw. getroffenen Auswahl erhaltenen Information die Ziel-Kommunikationspartner-Datenbank (20) aktualisiert wird.

9. Verfahren nach Anspruch 7 oder 8, soweit auf Anspruch 5 rückbezogen, wobei mittels der durch die Beantwortung der Fragen bzw. getroffenen Auswahl erhaltenen Information, oder zuvor anhand territorialer und/oder fachlicher Zuständigkeiten hinterlegt in der Datenbank, eine Auswahl des jeweiligen Kommunikationsagenten (40) erfolgt.

10. Verfahren nach einem der Ansprüche 1 bis 9, wobei die Mitteilung der personalisierten Internetadresse an die Ziel-Kommunikationspartner elektronisch, bspw. per Email oder SMS erfolgt.

11. Verfahren nach einem der Ansprüche 1 bis 9, wobei die Mitteilung der personalisierten Internetadresse an die Ziel-Kommunikationspartner postalisch wie etwa per Brief, Postkarte, Päckchen oder persönlich mittels individuell erstellter Visistenkarte erfolgt.

12. Verfahren nach einem der Ansprüche 1 bis 11, wobei die personalisierte Internetadresse eine URL ist, die Vor- und Nachnamen des Ziel-Kommunikationspartners und/oder andere personalisierte Informationen wie Geburtsort, Geburtsdatum etc. bzw. eindeutige Zahlen-lD des Ziel-Kommunikationspartners enthält.

13. Verfahren nach einem der Ansprüche 1 bis 12, wobei bei Aufruf der personalisierten Internetadresse die personalisierte Internetseite in Echtzeit erstellt wird.

14. Verfahren nach einem der Ansprüche 1 bis 13, wobei die personalisierte Internetseite dem Ziel-Kommunikationspartner zugeordnete personalisierte Informationen enthält.

15. Verfahren nach einem der Ansprüche 1 bis 14, wobei die personalisierte Internetseite dynamisch verknüpfte, themenbezogene Informationen zu Inhalten nach vorheriger Profilbildung des jeweiligen Kommunikationspartners enthält.

16. Verfahren nach einem der Ansprüche 1 bis 15, wobei die personalisierte Internetseite aus Grafik- und Textmodulen zusammengesetzt wird.

17. Kommunikationssystem aufweisend:
eine Ziel-Kommunikationspartner-Datenbank (20) mit Speichermitteln zur Speicherung wenigstens von Adressinformationen einer Vielzahl von Ziel-Kommunikationspartnern und ein Server-Computersystem (50), welches eingerichtet ist zur:
- Erfassung einer Anzahl von in der Datenbank (20) erhaltenen Ziel-Kommunikationspartnern,
- Erstellung personalisierter Internetadressen für die erfassten Ziel-Kommunikationspartner,
- Versendung von elektronischen oder Veranlassung der Versendung von postalischen Mitteilungen an die erfassten Ziel-Kommunikationspartner enthaltend wenigstens die personalisierte Internetadresse,
- Erfassung in Echtzeit, wenn eine der personalisierten Internetadressen angewählt wird,
- bei Erfassung einer Anwahl Erzeugung und Bereitstellung wenigstens einer der personalisierten Internetadresse zugeordneten personalisierten Internetseite, die wenigstens ein Kommunikations-Auswahlkriterium enthält
- Erfassung in Echtzeit, ob für den Aufruf der Internetseite das Kommunikations-Auswahlkriterium erfüllt wird, und
- wenn das Kommunikations-Auswahlkriterium erfüllt wird, zeitlich bestimmbare Herstellung einer Kommunikationsverbindung zwischen Kommunikationsagent und dem Ziel-Kommunikationspartner.

18. Kommunikationssystem nach Anspruch 17, wobei das Auswahlkriterium erfüllt ist, wenn der Ziel-Kommunikationspartner über die personalisierte internetseite eine Anfrage übermittelt.

19. Kommunikationssystem nach Anspruch 17, wobei das Auswahlkriterium erfüllt ist, wenn der Ziel-Kommunikationspartner auf der personalisierten Internetseite eine bestimmte Auswahl trifft.

20. Kommunikationssystem nach Anspruch 17, wobei das Auswahlkriterium erfüllt ist, wenn ein bestimmter Session-Parameter, beispielsweise eine festgelegte Zeitdauer des Aufrufs oder eine bestimmte Anzahl von besuchten Internetseiten und/oder vergleichend mit durchschnittichen Kennzahlen und den jeweiligen Auswertungsergebnissen ein entsprechender Wert erreicht ist.

21. Kommunikationssystem nach einem der Ansprüche 17 bis 20, aufweisend einen externen Kommunikationsagenten (40), dem die Erfüllung des Auswahlkriteriums mitgeteilt wird und der eingerichtet ist, die weitere Kommunikation nach Herstellung der Kommunikationsverbindung mit dem Ziel-Kommunikationspartner zu übernehmen.

22. Kommunikationssystem nach Anspruch 21, wobei der Kommunikationsagent (40) eingerichtet ist, zeitnah per Post oder in Echtzeit per Telefon oder über eine internetbasierende Kommunikationsverbindung (ton- und bildgebendes Verfahren, Chatroom) eine Verbindung mit dem Ziel-Kommunikationspartner zu übernehmen.

23. Kommunikationssystem nach einem der Ansprüche 17 bis 22, wobei die personalisierte Internetadresse durch den Ziel-Kommunikationspartner zu beantwortende Fragen und/oder ein bzw. mehrere Auswahlpunkte enthält.

24. Kommunikationssystem nach Anspruch 23, wobei mittels der durch die Beantwortung der Fragen bzw. getroffenen Auswahl erhaltenen Information die Ziel-Kommunikationspartner-Datenbank (20) aktualisierbar ist.

25. Kommunikationssystem nach Anspruch 23 oder 24, soweit auf Anspruch 21 rückbezogen, wobei mittels der durch die Beantwortung der Fragen bzw. getroffenen Auswahl erhaltenen Information oder zuvor anhand territorialer und/oder fachlicher Zuständigkeiten hinterlegt in der Datenbank, der jeweilige Kommunikationsagent (40) auswählbar ist.

26. Kommunikationssystem nach einem der Ansprüche 17 bis 25, wobei die Mitteilung der personalisierten Internetadresse an die Ziel-Kommunikationspartner elektronisch wie etwa per Email oder SMS erfolgt.

27. Kommunikationssystem nach einem der Ansprüche 17 bis 25, wobei die Mitteilung der personalisierten Internetadresse an die Ziel-Kommunikationspartner postalisch wie etwa per Brief, Postkarte, Päckchen oder persönlich mittels individuell erstellter Visistenkarte erfolgt.

28. Kommunikationssystem nach einem der Ansprüche 17 bis 27, wobei die personalisierte Internetadresse eine URL ist, die Vor- und Nachnamen des Ziel-Kommunikationspartners und/oder andere personalisierte Informationen wie Geburtsort, Geburtsdatum etc. bzw. eindeutige Zahlen-ID des Ziel-Kommunikationspartners enthält.

29. Kommunikationssystem nach einem der Ansprüche 17 bis 28, wobei bei Aufruf der personalisierten Internetadresse die personalisierte Internetseite in Echtzeit erstellt wird.

30. Kommunikationssystem nach einem der Ansprüche 17 bis 29, wobei die personalisierte Internetseite dem Ziel-Kommunikationspartner zugeordnete personalisierte Informationen enthält.

31. Kommunikationssystem nach einem der Ansprüche 17 bis 30, wobei die personalisierte Internetseite, dynamisch verknüpfte, themenbezogene Informationen zu Inhalten nach vorheriger Profilbildung des jeweiligen Kommunikationspartners enthält.

32. Kommunikationssystem nach einem der Ansprüche 17 bis 31, wobei die personalisierte Internetseite aus Grafik- und Textmodulen zusammengesetzt ist.
